# EUROPEAN PATENT APPLICATION

(11) **EP 4 242 664 A1**
(43) Date of publication of application: **13.09.2023**
(21) Application number: 21888899.8
(22) Date of filing: 18.08.2021
(51) Int. Cl.: G01N 35/00

(54) **AUTOMATIC ANALYSIS DEVICE**

(30) Priority: 05.11.2020 JP 2020184940
(71) Applicant: HITACHI HIGH-TECH CORPORATION, Tokyo 105-6409 (JP)
(72) Inventor: KURIKI, Shun, Tokyo 105-6409 (JP); SAKASHITA, Yukinori, Tokyo 105-6409 (JP); NODA, Kazuhiro, Tokyo 105-6409 (JP); FUKUDA, Nobuya, Tokyo 105-6409 (JP)
(74) Representative: MERH-IP Matias Erny Reichl Hoffmann Patentanwälte PartG mbB
(86) International application number: PCT/JP2021/030163
(87) International publication number: WO 2022/097346

(57) **Abstract**

To provide an automatic analyzer that can be designed with a high degree of freedom in accordance with cooling performance by cooling air in a space separated from a reagent refrigerator and suppresses the occurrence of dew condensation in the reagent refrigerator.

An automatic analyzer has a reagent refrigerator 20 that cools a reagent container 21 by using a refrigerant, a refrigerant cooling unit 201 that cools the refrigerant to circulate in the device, an air blowing unit 204 that takes in air fed to the reagent refrigerator 20 from the outside of the device, and a blowing air cooling unit 202 that cools air flowing from the air blowing unit 204 by using the refrigerant. The inside of the reagent refrigerator is positively pressurized by the blowing air that is taken in from the outside by the air blowing unit and is cooled by the blowing air cooling unit 202 to suppress the occurrence of dew condensation.

## Description

### Technical Field

The present invention relates to an automatic analyzer.

### Background Art

The automatic analyzer is a device that analyzes components such as blood or urine collected from a patient in a clinical test. An analysis is performed by causing reactions between various reagents and a sample and measuring discoloration, luminescence, and the like of a reaction liquid. In order to maintain quality of a reagent, the automatic analyzer includes a reagent refrigerator that keeps a reagent temperature cool within a certain range.

The inside of the reagent refrigerator is kept at a lower temperature than outside air. On the other hand, the reagent refrigerator is partially opened in order to dispense the reagent. Therefore, when the outside air flows in from an open portion, dew condensation occurs in the reagent refrigerator, and an environment in the refrigerator deteriorates.

PTL 1 discloses a technique of preventing dew condensation by sending cooled air from the outside of a reagent refrigerator to prevent inflow of outside air.

### Citation List

### Patent Literature

PTL 1: JP2009-270857A

### Summary of Invention

### Technical Problem

In an aspect of cooling air continuously sent into the reagent refrigerator, when a heat transfer area of the air and a refrigerant is not sufficient, the air is not cooled to a target temperature, and cooling performance of the reagent refrigerator is lowered. However, in the automatic analyzer disclosed in PTL 1, since a cooling function of the sent air, is integrated with the reagent refrigerator, a shape of the reagent refrigerator is spatially constrained in consideration of designing of an air cooling structure, and a sufficient heat transfer area may not be secured.

In view of the above, an object of the invention is to provide an automatic analyzer that can be designed with a high degree of freedom in accordance with target cooling performance by cooling the sent air in a space separated from a reagent refrigerator and suppresses the occurrence of dew condensation in the reagent refrigerator.

### Solution to Problem

In order to achieve the above object, the invention provides an automatic analyzer including: a reagent refrigerator that stores a reagent container in which a reagent to be reacted with a sample is accommodated; a refrigerant cooling unit that is configured to cool the reagent refrigerator by using a refrigerant; an outside air intake unit that is configured to take in outside air to positively pressurize the inside of the reagent refrigerator with respect to the circumference of the reagent refrigerator; and a blowing air cooling unit that is arranged outside the reagent refrigerator and configured to blow cooling air obtained by cooling the outside air by using the refrigerant to the inside of the reagent refrigerator.

### Advantageous Effects of Invention

According to the invention, the inside of the reagent refrigerator is positively pressurized by blowing air that is taken in from the outside and is cooled by the blowing air cooling unit to suppress the occurrence of dew condensation.

### Brief Description of Drawings

Fig. 1 is a plan view showing an outline of an automatic analyzer.
Fig. 2 is a configuration outline view showing an A-A cross section of the automatic analyzer.
Fig. 3 is an outline view showing an inner structure of a blowing air cooling unit in a first embodiment.
Fig. 4 is an outline view showing a three-dimensional structure of the blowing air cooling unit in the first embodiment.
Fig. 5 is a diagram showing arrangements of the blowing air cooling unit and an air blowing unit in a second embodiment.
Fig. 6 is an outline view showing an inner structure of a blowing air cooling unit in a third embodiment.
Fig. 7 is an outline view showing a three-dimensional structure of the blowing air cooling unit in the third embodiment.

### Description of Embodiments

Hereinafter, embodiments of an automatic analyzer according to the invention will be described with reference to the drawings. The automatic analyzer is a device that analyzes a sample such as blood or urine collected from a patient in a clinical test.

### First Embodiment

A first embodiment is an embodiment of an automatic analyzer including a reagent refrigerator that stores a reagent container in which a reagent to be reacted with a sample is accommodated, a refrigerant cooling unit that cools the reagent refrigerator by using a refrigerant, an outside air intake unit that takes in outside air to positively pressurize the inside of the reagent refrigerator with respect to the circumference of the reagent refrigerator, and a blowing air cooling unit that is arranged outside the reagent refrigerator and blows cooling air obtained by cooling the outside air by using the refrigerant to the inside of the reagent refrigerator.

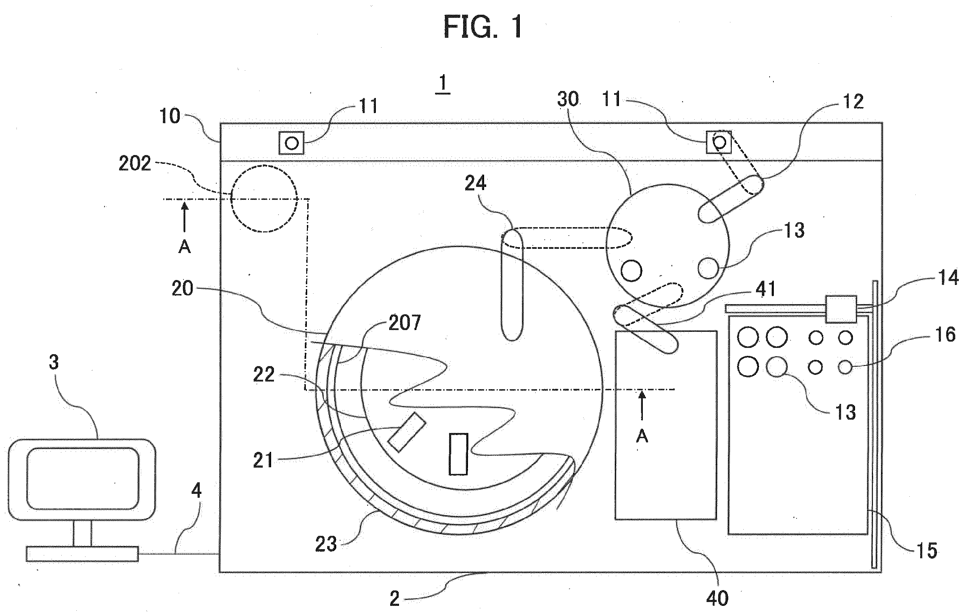

An automatic analyzer 1 according to the first embodiment of the invention will be described with reference to Fig. 1. The automatic analyzer 1 is configured by connecting an analysis unit 2 and a control unit 3 via a communication line 4. The control unit 3 is a device that controls units of the analysis, unit 2 and is, for example, a so-called computer. An operator inputs target analysis contents from an input unit such as a keyboard, a mouse, or a touch panel that is included in the control unit 3, and confirms an analysis result by an output unit such as a liquid crystal display or a touch panel.

The analysis unit 2 is a device that analyzes a sample by measuring luminescence or discoloration generated by a reaction between the reagent for analysis and the sample, and includes a sample conveyance channel 10, a reagent refrigerator 20, an incubator 30, and a reaction liquid measurement unit 40.

The sample conveyance channel 10 is a mechanism that conveys a sample container 11 in which a sample such as blood or urine is accommodated to a dispensing position of a sample dispensing unit 12. The sample dispensing unit 12 aspirates the sample from the conveyed sample container 11 and discharges the sample to a reaction container 13 installed in the incubator 30. In the sample dispensing unit 12, dispensing tips 16 conveyed from a loading rack 15 to a dispensing tip attachment and detachment portion 13 by a conveyance unit 14 are attached. In order to prevent contamination at the time of sample dispensing, the dispensing tips 16 are replaced every time dispensing is performed.

The reagent refrigerator 20 is a mechanism that stores reagent containers 21 in each of which the reagent for analysis is accommodated at a low temperature, and includes a reagent disk 22 and a reagent jacket 23. An internal temperature of the reagent refrigerator 20 is maintained at, for example, five to ten degrees centigrade. The reagent containers 21 are mounted on the reagent disk 22, and are moved to a predetermined position, for example, a dispensing position of a reagent dispensing unit 24 by being rotated about an axis in a vertical direction as a rotation axis. The reagent jacket 23 is a covering portion located outside the reagent disk 23, and remains stationary even when the reagent disk 23 rotates.

The incubator 30 is a mechanism that maintains a constant temperature in order to promote a reaction of a mixed liquid of the sample dispensed by the sample dispensing unit 12 and the reagent dispensed by the reagent dispensing unit 24. Before the sample or the reagent is dispensed into the incubator 30, the reaction container 13 is conveyed from the loading rack 15 by the conveyance unit 14.

The reaction liquid measurement unit 40 analyzes components of the sample by measuring discoloration, luminescence, and the like of a reaction liquid dispensed by a reaction liquid dispensing unit 41 from the reaction container 13 arranged in the incubator 30. A measurement result of the reaction liquid measurement unit 41 is displayed on the output unit such as a liquid crystal display or a touch panel that is included in the control unit 3. The reaction container 13 into which the reaction liquid is dispensed is removed by being conveyed from the incubator 30 to the loading rack 15 by the conveyance unit 14.

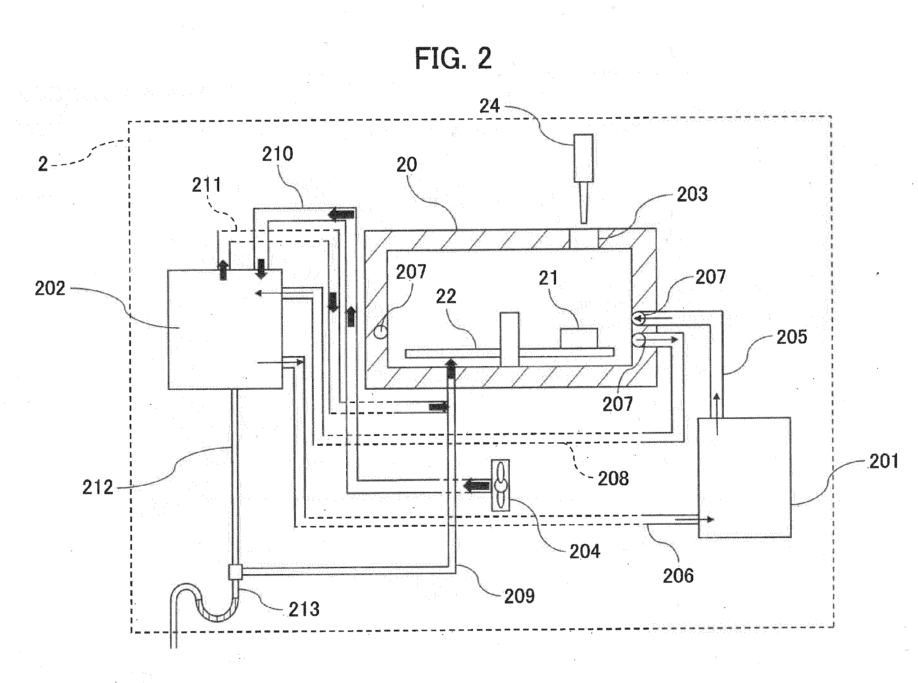

Structures of the reagent refrigerator 20 and relevant mechanisms inside the analysis unit 2 according to the first embodiment will be described with reference to Fig. 2. Fig. 2 shows a configuration outline of an A-A cross section of the automatic analyzer. The reagent refrigerator 20 according to the present embodiment is connected to a refrigerant cooling unit 201 and a blowing air cooling unit 202 via a plurality of flow channels 205 to 215. The reagent refrigerator 20 has a reagent aspiration hole 203, which is a hole for lowering the reagent dispensing mechanism 24 to a position at which each reagent container 21 is installed. The refrigerant cooling unit 201, an outside air intake unit 204, the blowing air cooling unit 202, and the reaction liquid measurement unit 40 of the analysis unit 2 are controlled by the control unit 3.

As shown in the same drawing, the blowing air cooling unit 202 is arranged next to the reagent refrigerator 20 in a horizontal direction, the refrigerant cooling unit 201 is arranged on the lower side of the reagent refrigerator 20 and the blowing air cooling unit 202 in the vertical direction, and the air blowing unit 204 functioning as the outside air intake unit is arranged on the lower side of the reagent refrigerator 20 and the blowing air cooling unit 202 in the vertical direction. This is for ease of implementation.

The refrigerant cooling unit 201 is a mechanism that feeds and cools a refrigerant such as cooling water. The refrigerant fed from the refrigerant cooling unit 201 through an eighth flow channel 205 circulates in a portion to be cooled in the device, and then returns to the refrigerant cooling unit 201 through a sixth flow channel 206. The refrigerant whose temperature increases due to cooling of each unit in the device is cooled again in the refrigerant cooling unit 201. At the same time, the refrigerant cooling unit 201 releases heat absorbed from the refrigerant to the outside of the device. The cooled refrigerant is again fed through the eighth flow channel 205 and repeatedly circulates in the device.

A seventh flow channel 207 is arranged in a space inside the reagent jacket 23. Here, the seventh flow channel 207 is arranged to be in contact with an inner side surface of the reagent jacket 23.

The refrigerant flowing through the seventh flow channel 207 via the eighth flow channel 205 circulates at least one turn in the space inside the reagent jacket 25. The refrigerant absorbs heat of air in the reagent refrigerator 20, thereby cooling a space inside the refrigerator and the reagent containers 21 installed in the refrigerator. After circulation, the refrigerant flows to the outside of the reagent refrigerator 20 through a fourth flow channel 208.

The space in the reagent refrigerator 20 is cooled, so that dew condensation occurs due to moisture contained in the air. The generated dew condensation water is discharged from a third flow channel 209 to the outside of the reagent refrigerator 20 via a drain (discharge port).

In other words, the blowing air cooling unit 202 includes a first flow channel 211 that introduces the cooling air to the inside of the reagent refrigerator 20 and a second flow channel 212 that discharges the dew condensation water generated by the blowing air cooling unit 202 to the drain, the reagent refrigerator 20 includes the third flow channel 209 that discharges the dew condensation water generated by the reagent refrigerator to the drain, and the first flow channel 211 and the second flow channel 212 are formed to be joined with the third flow channel 209. A water storage unit storing the dew condensation water is provided nearer the drain side than a point where the second flow channel 212 and the third flow channel 209 are joined with each other so as not to leak the cooling air outside.

The air blowing unit 204 functions as the outside air intake unit that sends air from the outside of the device to the inside thereof. For example, a component such as a fan is rotated, so that the air taken in from the outside of the device flows to the inside of the device through the air blowing unit 204. The air is referred to as blowing air. In order to prevent dust and foreign matters from being aspirated, it is preferable that the air blowing unit 204 is arranged such that an air intake surface does not face the ground.

The blowing air cooling unit 202 is a mechanism that cools the air sent from the air blowing unit 204.

The blowing air cooling unit 202 is connected to a fifth flow channel 210 that takes in air flowing from the air blowing unit 204, the first flow channel 211 that sends out the air to the outside of the blowing air cooling unit after cooling, the fourth flow channel 208 that takes in the refrigerant, the sixth flow channel 206 that sends out the refrigerant, and a tenth flow channel 214 that discharges the dew condensation water. That is, the blowing air cooling unit 202 includes the tenth flow channel serving as a blowing air channel that introduces the outside air taken in from the air blowing unit 204 serving as the outside air intake unit to the first flow channel 211.

The refrigerant that passes through the reagent refrigerator 20 passes through the fourth flow channel 208 and flows into the blowing air cooling unit 202. The refrigerant flows through a space in the blowing air cooling unit 202, cools the air flowing in from the fifth flow channel 210, and then flows to the outside of the blowing air cooling unit 202 through the sixth flow channel 206. Thereafter, the refrigerant returns to the refrigerant cooling unit 201.

The first flow channel 211 is connected to the second flow channel 209 through which the dew condensation water discharged from the reagent refrigerator 20 via the drain flows. The cooled blowing air flowing out from the blowing air cooling unit 202 to the first flow channel 211 flows to the inside of the reagent refrigerator 20 through the second flow channel 209.

The space inside the reagent refrigerator 20 is positively pressurized by the blowing air, and pressure in the space is higher than that of the air outside the device. Accordingly, inflow of outside air is suppressed from the reagent aspiration hole 203 to the inside of the refrigerator.

When the blowing air is cooled by the refrigerant in the blowing air cooling unit 202, the amount of moisture in the air decreases due to the occurrence of dew condensation. Therefore, the blowing air is sent into the reagent refrigerator 20 in a dry state. Accordingly, the blowing air has an effect of reducing the amount of dew condensation generated in the reagent refrigerator 20 together with an effect of suppressing the inflow of the outside air from the reagent aspiration hole 203 described above.

In addition, since both the reagent refrigerator 20 and the blowing air cooling unit 202 use the circulating refrigerant for cooling, the blowing air cooled by the blowing air cooling unit 202 has the same temperature as that of the air in the reagent refrigerator 20. Therefore, an influence of the inflow of the blowing air on temperature adjustment inside the reagent refrigerator 20 is suppressed.

The air inside the blowing air cooling unit 202 is cooled, so that the dew condensation occurs due to the moisture contained in the air. The generated dew condensation water is discharged from the second flow channel 212 to the outside of the blowing air cooling unit 202.

The third flow channel 209 and the second flow channel 212 are joined downstream to form a ninth flow channel 213, and the ninth flow channel 213 is connected to the outside of the device via the drain. Therefore, the dew condensation water generated by both the reagent refrigerator 20 and the blowing air cooling unit 202 is discharged to the outside of the device through the ninth flow channel 213.

The ninth flow channel 213 includes the water storage unit described above in which the dew condensation water temporarily remains. The water storage unit is indicated by oblique lines in a highlighted manner in Fig. 2. The dew condensation water flowing from the reagent refrigerator 20 and the blowing air cooling unit 202 temporarily remains in the water storage unit before being discharged to the outside of the device. When the amount of water remaining in the water storage unit reaches an upper limit, the amount of water exceeding the upper limit overflows from the water storage unit and is discharged to the outside of the device. The ninth flow channel 213 is closed by the dew condensation water remaining in the water storage unit, and the air flowing from the air blowing unit 204 does not flow out from the ninth flow channel 213 to the outside of the device. Therefore, a decrease in the amount of air blown to the reagent refrigerator 20 and a decrease in a positive pressure effect in the refrigerator are suppressed.

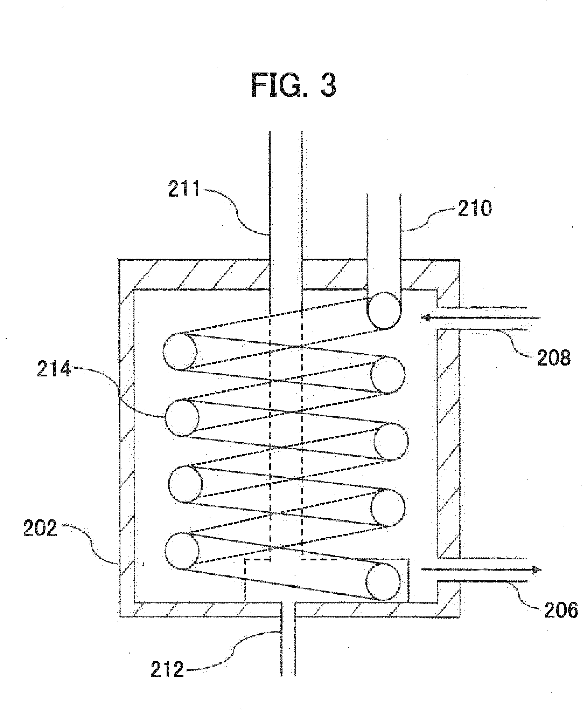

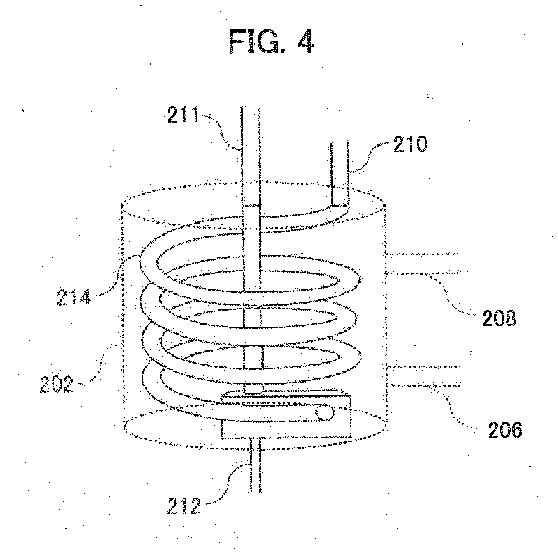

A structure of the blowing air cooling unit 202 according to the present embodiment will be described with reference to Figs. 3 and 4. The blowing air cooling unit 202 has a cavity inside, and the cavity is connected to the fourth flow channel 208 and the second flow channel 206. In addition, the blowing air cooling unit 202 includes the tenth flow channel 214 which is a blowing air channel that passes through the cavity. The tenth flow channel 214 has a structure in which a part of the tenth flow channel 214 is spirally curved so as to increase a contact area with the refrigerant. At a downstream of a spiral structure portion in the cavity, the tenth flow channel 214 is branched into a main flow connected to the first flow channel 211 and a branch.flow connected to the second flow channel 212. Here, the branch flow is a flow channel having an inner diameter smaller than that of the main flow.

The refrigerant flowing to the inside of the blowing air cooling unit 202 from the fourth flow channel 208 passes through the cavity and flows out from the second flow channel 206 to the outside. Here, an inflow amount is larger than an outflow amount, and the amount of refrigerant liquid in the cavity increases as time elapses. When a certain time elapses, the inside of the cavity is filled with the circulating refrigerant.

When the cavity in the blowing air cooling unit 202 is filled with the refrigerant, the tenth flow channel 214 is immersed in the circulating refrigerant. The circulating refrigerant absorbs heat of the blowing air flowing through the tenth flow channel 214, and the blowing air is cooled. With the cooling of the blowing air, the dew condensation occurs, and the dew condensation water is discharged through the second flow, channel 212. The cooled blowing air flows into the first flow channel 211.

The dew condensation water generated by cooling the blowing air passes through the branch flow of the tenth flow channel 214 and is discharged from the second flow channel 212. In the configuration of the present embodiment, an inclination of the spiral structure and the branch flow of the tenth flow channel 214 are oriented downward in the vertical direction, so that the dew condensation water is easily discharged.

### Second Embodiment

In the first embodiment, as shown in Fig. 1, the blowing air cooling unit 202 is arranged next to the reagent refrigerator 20 in the horizontal direction. The blowing air cooling unit 202 is connected to the reagent refrigerator 20 or the air blowing unit 204 via the flow channels, thereby satisfying a function. Therefore, the blowing air cooling unit 202 is not limited to the arrangement according to the first embodiment. On the other hand, when pressure loss is large in a process in which the blowing air flows from the air blowing unit 204 to the reagent refrigerator 20, performance of positive pressure in the reagent refrigerator 20 may be lowered. Thus, in order to suppress the pressure loss, it is desirable that a length of the flow channel for the blowing air is short and the number of curves of the flow channel is small.

Here, in a second embodiment, an embodiment in which arrangements of the blowing air cooling unit 202 and the air blowing unit 204 capable of suppressing the pressure loss of the blowing air have other configurations will be described. In the present embodiment, configurations are the same as those shown in Figs. 1, 3, and 4 according to the first embodiment, and the description thereof will be omitted.

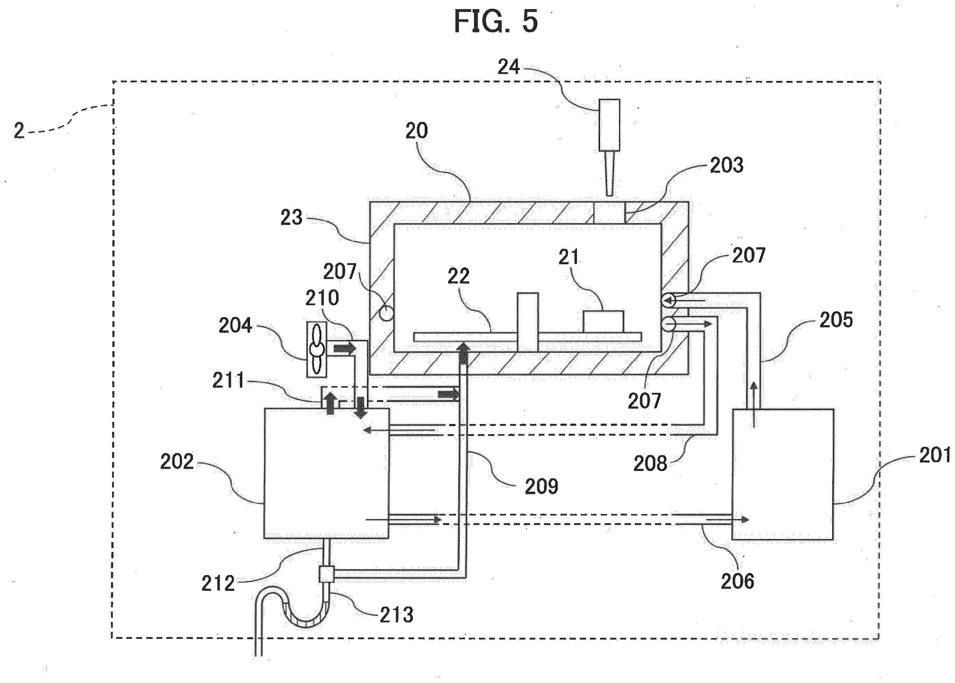

The arrangements of the blowing air cooling unit 202 and the air blowing unit 204 according to the second embodiment will be described with reference to Fig. 5. In the present embodiment, the blowing air cooling unit 202 is arranged on the lower side in the vertical direction than the reagent refrigerator 20. In addition, the air blowing unit 204 is arranged near the outside of the device.

With the arrangement shown in Fig. 5, the length of the flow channel of the blowing air from the air blowing unit 204 to the reagent refrigerator 20 is shortened, and the number of curves of the flow channel is reduced, and thus the pressure loss can be suppressed.

### Third Embodiment

In the first embodiment, in order to increase the contact area between the flow channel of the blowing air and the refrigerant inside the blowing air cooling unit 202, a part of the tenth flow channel 214 has a spiral structure. On the other hand, the flow channel can be designed to have a different shape in accordance with target cooling performance, and the shape is not limited to a shape according to the first embodiment. Here, as a third embodiment, a shape of a configuration in which an inner structure of the blowing air cooling unit 202 is further simplified in order to suppress pressure loss will be described.

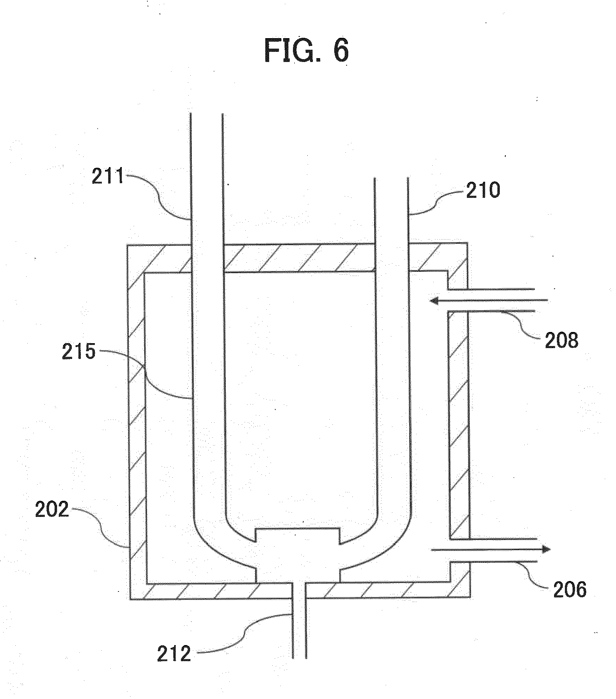

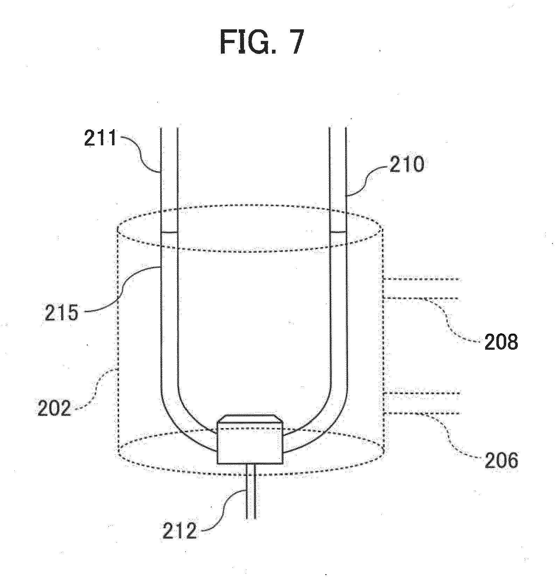

The structure of the blowing air cooling unit 202 according to the third embodiment will be described with reference to Figs. 6 and 7. The blowing air cooling unit 202 has a cavity inside, and the cavity is connected to the fourth flow channel 208 and the second flow channel 206. In addition, the blowing air cooling unit 202 includes a U-shaped eleventh flow channel 215 which is a blowing air channel that passes through the cavity. The eleventh flow channel 215 is branched into a main flow connected to the first flow channel 211 aand a branch flow connected to the second flow channel 212 in the cavity. Here, the branch flow is a flow channel having a diameter smaller than that of the main flow.

A refrigerant flowing to the inside of the blowing air cooling unit 202 from the fourth flow channel 208 passes through the cavity and flows out from the second flow channel 206 to the outside. Here, an inflow amount is larger than an outflow amount, and the amount of refrigerant liquid in the cavity increases as time elapses. When a certain time elapses, the inside of the cavity is filled with circulating refrigerant. When the cavity in the blowing air cooling unit 202 is filled with the refrigerant, the eleventh flow channel 215 is immersed in the circulating refrigerant.

The circulating refrigerant absorbs heat of the blowing air flowing through the eleventh flow channel 215, and the blowing air is cooled. With the cooling of the blowing air, dew condensation occurs, and dew condensation water is discharged through the second flow channel 212. The cooled blowing air flows into the first flow channel 211.

The dew condensation water generated by cooling the blowing air passes through the branch flow of the eleventh flow channel 215 and is discharged from the second flow channel 212. Here, the U shape and the branch flow of the eleventh flow channel 215 are oriented downward in a vertical direction, so that the dew condensation water is easily discharged.

The invention is not limited to the above-described embodiments, and includes various modifications. For example, the above embodiments are described in detail for better understanding of the invention, and the invention is not necessarily limited to those including all configurations described above.

### List of Reference Signs

- 1: automatic analyzer
- 2: analysis unit
- 3: control unit
- 4: communication line
- 10: sample conveyance channel
- 11: sample container
- 12: sample dispensing unit
- 13: reaction container
- 14: conveyance unit
- 15: loading rack
- 16: dispensing tip
- 20: reagent refrigerator
- 21: reagent container
- 22: reagent disk
- 23: reagent jacket
- 24: reagent dispensing unit
- 30: incubator
- 40: reaction liquid measurement unit
- 41: reaction liquid dispensing unit
- 201: refrigerant cooling unit
- 202: blowing air cooling unit
- 203: reagent dispensation hole
- 204: air blowing unit
- 205: first flow channel
- 206: second flow channel
- 207: third flow channel
- 208: fourth flow channel
- 209: fifth flow channel
- 210: sixth flow channel
- 211: seventh flow channel
- 212: eighth flow channel
- 213: ninth flow channel
- 214: tenth flow channel
- 215: eleventh flow channel

## Claims

1. An automatic analyzer comprising:
a reagent refrigerator that stores a reagent container in which a reagent to be reacted with a sample is accommodated;
a refrigerant cooling unit that is configured to cool the reagent refrigerator by using a refrigerant;
an outside air intake unit that is configured to take in outside air to positively pressurize an inside of the reagent refrigerator with respect to a circumference of the reagent refrigerator; and
a blowing air cooling unit that is arranged outside the reagent refrigerator and configured to blow cooling air obtained by cooling the outside air by using the refrigerant to the inside of the reagent refrigerator.

2. The automatic analyzer according to claim 1,
wherein the blowing air cooling unit includes: a first flow channel that introduces the cooling air to the inside of the reagent refrigerator; and a second flow channel that discharges dew condensation water generated by the blowing air cooling unit to a drain,
wherein the reagent refrigerator includes a third flow channel that discharges dew condensation water generated by the reagent refrigerator to the drain, and
wherein the first flow channel and the second flow channel are formed to be joined with the third flow channel, and a water storage unit storing the dew condensation water is provided nearer the drain side than a point where the second flow channel and the•third flow channel are joined with each other so as not to leak the cooling air outside.

3. The automatic analyzer according to claim 1,
wherein the blowing air cooling unit is arranged next to the reagent refrigerator in a horizontal direction.

4. The automatic analyzer according to claim 1,
wherein the refrigerant cooling unit is arranged on a lower side of the reagent refrigerator and the blowing air cooling unit in a vertical direction.

5. The automatic analyzer according to claim 1,
wherein the outside air intake unit is arranged on a lower side of the reagent refrigerator and the blowing air cooling unit in a vertical direction.

6. The automatic analyzer according to claim 2,
wherein the blowing air cooling unit includes a blowing air channel through which the outside air taken in from the outside air intake unit is introduced to the first flow channel.

7. The automatic analyzer according to claim 6,
wherein the blowing air channel is spirally configured.

8. The automatic analyzer according to claim 6,
wherein the blowing air channel is configured in a U-shape opened upward in a vertical direction.

9. The automatic analyzer according to claim 1 further comprising:
a reaction liquid measurement unit; and
a control unit,
wherein the control unit controls the refrigerant cooling unit, the outside air intake unit, the blowing air cooling unit, and the reaction liquid measurement unit.

10. The automatic analyzer according to claim 9,
wherein the control unit has an output unit for outputting a display screen, and a measurement result of the reaction liquid measurement unit is displayed on the display screen.
